# NEUE EUROPÄISCHE PATENTSCHRIFT

(11) **EP 1 026 030 B2**
(45) Veröffentlichungstag und Bekanntmachung des Hinweises auf die Entscheidung über den Einspruch: **26.09.2007**
(45) Hinweis auf die Patenterteilung: 26.11.2003
(21) Anmeldenummer: 00102391.0
(22) Anmeldetag: 03.02.2000
(51) Int. Cl.: B60P 7/08

(54) **Befestigungsvorrichtung**
Fastening device
Dispositif de fixation

(30) Priorität: 03.02.1999 DE 19904366
(43) Veröffentlichungstag der Anmeldung: 09.08.2000
(73) Patentinhaber: Sommer Fahrzeugbau GmbH & Co. KG, 33640 Bielefeld (DE)
(72) Erfinder: Franz, Carl, 42111 Wuppertal (DE)
(74) Vertreter: Alber, Norbert

(56) Entgegenhaltungen:
- WO-A-98/02332
- DE-A- 4 318 724
- DE-C- 4 337 686
- DE-U- 2 984 625
- DE-U- 29 911 458
- Zeitschrift F+K, Ausgabe 8/98, Seiten 40,41

## Beschreibung

### I. Anwendungsgebiet

Die Erfindung betrifft eine Befestigungsvorrichtung, wie sie an den Innenseiten von Aufbauwänden von Lastfahrzeugen, insbesondere Lastkraftwagen, Anhängern etc. verwendet werden.

### II. Technischer Hintergrund

In solchen Fahrzeugen, bei denen insbesondere die Aufbauten aus Schichtholzplatten und/oder Sandwichplatten bestehen, werden Befestigungspunkte benötigt, um mit Hilfe von Zurrgurten stückiges Ladegut auf der Ladefläche gegen Verrutschen zu sichern.

Zu diesem Zweck werden Befestigungsvorrichtungen verwendet, welche mindestens einen, in der Regel jedoch eine Vielzahl von regelmäßig angeordneten, Befestigungstöpfen umfassen, die den den Innenwänden als Befestigungspunkte angeordnet, insbesondere in die Aufbauwände ganz oder teilweise eingelassen sind, um keine Beschädigungsgefahr für das Ladegut darzustellen.

Derartige Befestigungstöpfe oder auch Zurrtöpfe genannt bestehen in der Regel aus einem sogenannten Basistopf, der aus Stahlblech besteht und z. B. im Tiefziehverfahren hergestellt wird, über dessen Topfvertiefung sich mittig ein Steg oder eine Stange, in der Regel ebenfalls aus Metall bestehend, erstreckt, die an ihren Enden mit dem Basistopf verbunden, in der Regel verschweißt, ist. Ein und in der Regel nur ein Zurrgurt kann um den Steg herumgefädelt werden und mit so hoher Kraft verspannt werden, wie es die Befestigung, insbesondere die Verklebung, des Basistopfes in der entsprechenden topfförmigen Vertiefung der Aufbauwand erlaubt.

Dabei ist es auch bekannt, die Flanken des Basistopfes schräg nach innen zum Boden des Basistopfes hin abfallend zu gestalten, um das Herumfädeln des Gurtes um den Steg zu erleichtern.

In der Regel wurden derartige Befestigungstöpfe so in regelmäßigen Reihen entlang der Aufbauwände angeordnet, daß die Stege der einzelnen Befestigungstöpfe senkrecht standen, da die Zurrgurte hiervon meist etwa horizontal abstrebend verliefen.

Für andere Anwendungsfälle wäre jedoch ein horizontaler oder schrägstehender Steg vorteilhafter. Zusätzlich müssen für andere Befestigungsmittel anders gestaltete Befestigungspunkte an den Innenseiten der Aufbauwände vorgesehen werden, beispielsweise für die Balkenköpfe von Sperrbalken oder Doppelstockbalken.

Die WO 98/02332 zeigt eine Befestigungsvorrichtung nach dem Oberbegriff des Anspruchs 1.

### III. Darstellung der Erfindung

### a) Technische Aufgabe

Es ist daher Aufgabe gemäß der vorliegenden Erfindung, eine Befestigungsvorrichtung und insbesondere deren Befestigungstopf zu schaffen, welcher die Anordnung von Zurrgurten in unterschiedlichen Spannrichtungen ebenso ermöglicht wie die Anordnung von anderen Befestigungsmitteln, und dies trotz einfacher und kostengünstiger Herstellbarkeit der Befestigungsvorrichtung.

### b) Lösung der Aufgabe

Diese Aufgabe wird durch die Merkmale des Anspruches gelöst. Vorteilhafte Ausführungsformen ergeben sich aus den Unteransprüchen.

Durch die Anordnung mehrerer, im Winkel zueinander stehender Stege über der Topfvertiefung ist es einfacher, Zurrgurte in unterschiedlichen Abstrebrichtungen daran zu befestigen.

Durch Anordnung dieser mehreren Stege im Polygon ist der freie Abstand zwischen den Außenkanten der Stege und den umgebenden Flanken des Topfes gering, genügt aber zum Ausfädeln oder Einfädeln eines Zurrgurtes. Das Herausnehmen aus der Topfvertiefung ist nach wie vor relativ leicht möglich durch eine große Mittenöffnung innerhalb der als Polygon angeordneten Stege. Das Polygon wird insbesondere durch von seinen Ecken abstrebende Fortsätze mit dem Basistopf verbunden, insbesondere verschweißt, und zwar etwa in der Hauptebene des Topfes, also der offenen Frontfläche, die parallel zur Bodenebene des Basistopfes verläuft.

Die Stege bilden dabei vorzugsweise gleichmäßige Polygone, wobei insbesondere bei Polygonen mit ungerader Eckenanzahl die Befestigungstöpfe so in die Aufbauwände eingebaut werden, daß eine Spitze des Polygons nach unten weist. Eine bevorzugte Ausführungsform weist vier Stege auf, die miteinander ein Rechteck, insbesondere ein Quadrat, bilden.

Die Stege sollten insbesondere nicht über die Frontfläche des Basistopfes vorstehen.

Der Topf selbst besteht aus einem rotationssymmetrischen Teil, insbesondere als Tiefziehteil, oder aus einem Teil, welches in zwei aufeinander senkrechtstehenden Querrichtungen zueinander symmetrisch ist, also beispielsweise einer Ellipse oder einem Rechteck mit abgerundeten Ecken.

In allen Fällen ist es vorteilhaft, die Flanken des Topfes zumindest auf der Innenseite, der Topfvertiefung, schräg nach innen zum Boden hin abfallend auszugestalten.

Um auch in den Randbereichen der Stege noch einen ausreichenden Abstand zu dem umgebenden Basistopf zu gewährleisten, sind die Außenkanten der Stege insbesondere bogenförmig konvex nach außen gewölbt, insbesondere mit einem Krümmungsradius entsprechend dem Krümmungsradius des Überganges der Flanken zu dem umgebenden Flansch des Basistopfes. Hierdurch wird im mittleren, jeweiligen Stegbereich eine höhere Biegesteifigkeit erreicht.

Durch die Bildung der Mittenöffnung wird weiterhin neben dem Befestigen von Zurrgurten auch das Einhängen von Balkenköpfen an dem Befestigungstopf ermöglicht, welcher so gestaltet ist, daß er den untenliegenden Steg formschlüssig hintergreift. Bei einem ungeraden Stern aus Stegen, bei dem die Spitze nach unten weist, ergibt dies eine Selbstzentrierung des Balkenkopfes und vermeidet damit Klappergeräusche durch Beschleunigungs- und Bremskräfte.

Der Stern kann dabei aus einzelnen Stegen bestehen, oder auch insgesamt zusammen mit den Fortsätzen einstückig, beispielsweise als Stanzteil, ausgebildet sein.

Weiterhin ist der Übergang zwischen den Fortsätzen und den nach außen weisenden Flanken der Stege 3 gerundet, so daß ein um diesen Steg herumgeführterZurrgurt 15 durch diese Rundungen automatisch in die Mitte des Steges zentriert wird, und dabei insbesondere Faltungen und Verwerfungen des Gurtes vermieden werden.

Wenn kein Verschweißen mit den Flanken des Basistopfes gewünscht ist, setzt der Stern direkt auf dem Boden des Basistopfes auf, wozu insbesondere Abstandsfüße des Sternes dienen können, die bei der Herstellung des Sternes als Stanzbiegeteil erzeugt werden können. Neben dem Verschweißen von außen, also von der offenen Vorderseite des Basistopfes her, kommt das Verschweißen durch Lochschweißung von der Rückseite her in Frage, wozu entsprechende Durchgangsöffnungen, in der Regel Bohrungen, im Basistopf, insbesondere in dessen Boden, vorhanden sein müssen an solchen Stellen, an denen der Stern bzw. die Stege mit ihren Abstandsfüßen auf dem Boden des Basistopfes aufsetzen.

Auch ein Vernieten, insbesondere gegenüber dem Boden des Basistopfes, ist möglich, wobei insbesondere diese Nieten gleichzeitig zum Miteinander-Verbinden mehrerer Stege zu einem Stern dienen können.

Der am eigentlichen Basistopf in der Hauptebene, also der Öffnungsebene, außen umlaufende Flansch dient hauptsächlich einem sauberen Aufsetzen auf der tragenden Wand. Sofern dieser Flansch versenkt wird, kann erreichtwerden, daß der Befestigungstopf insbesondere überhaupt nicht über die Oberfläche der Aufbauwand vorsteht.

Der Flansch dient ferner dem Zurückhalten von Kleber, welcher vom Bodenbereich des Basistopfes aus beim Einsetzen in eine entsprechende Vertiefung zum Rand hin herausgedrückt werden könnte.

Durch eine Kröpfung des äußeren Flanschrandes nach innen, also um etwa 10 bis 45°, vorzugsweise 15 bis 30° aus der Hauptebene heraus in Richtung auf die Bodenebene, wird verhindert, daß an der Wand des Aufbaus entlanggleitendes Ladegut an der Kante des Flansches hängenbleiben und den Befestigungstopf herausreißen kann bzw. das Ladegut beschädigt wird, und die nach innen gekröpfte umlaufende Kante des Flansches, die somit hart an derAufbauwand bzw. einer entsprechenden ringförmigen Vertiefung anliegt, dient gleichzeitig als Sperre gegen das Austreten von Kleber.

Zusätzlich zu den Stegen, die von beiden Seiten her hintergriffen werden können, können auch Stabilisierungsplatten zusätzlich über der Topfvertiefung angeordnet werden, die nur von einer Seite her hintergriffen werden können und entlang ihrer anderen Längskante mit dem Basistopf verbunden, insbesondere verschweißt sind, und deshalb eine höhere Stabilität bieten und somit insbesondere zum Einhängen eines Balkenkopfes prädestiniert sind.

Ein derartiger Balkenkopf kann entweder der Kopf eines Sperrbalkens sein, der quer zur Fahrtrichtung des Fahrzeuges verlaufend Ladung sichern soll oder als Kopf eines sogenannten Doppelstockbalkens, welcher ebenfalls in Querrichtung verlaufend als Auflage für eine Palette oder für einen Zwischenboden dient, auf dem in einer zweiten Ebene Ladung abgestellt werden kann.

Ein solcher Balkenkopf weist an seinem einen Ende eine Nase auf, die bei Einsatz an einem Befestigungstopf nach unten weisend den unteren Steg bzw. die untere Stabilisierungsplatte hintergreift sowie vorzugsweise einen nach oben weisenden Fortsatz, der im eingesetzten Zustand knapp unter dem obersten Steg endet, und damit ein Abheben nach oben und damit selbsttätiges Lösen des Balkenkopfes verhindert. Zusätzlich kann am oberen Ende des Balkenkopfes eine federbeaufschlagte und damit deaktivierbare Sicherungsklinke vorhanden sein, die auch den oberen Steg formschlüssig hintergreift. Diese Ausführung wird vorallem auf der gegenüberliegenden Balkenseite angewendet.

### c) Ausführungsbeispiele

Ausführungsformen gemäß der Erfindung sind im folgenden anhand der Figuren beispielhaft näher beschrieben. Es zeigen:
- Fig. 1a: einen Befestigungstopf in der Aufsicht,
- Fig. 1b: den Befestigungstopf der Fig. 1a im Schnitt mit eingehängtem Balkenkopf,
- Fig. 1c: eine Schnittdarstellung durch einen abgewandelten Befestigungstopf gegenüber Fig. 1a,
- Fig. 2: eine Aufsicht auf einen etwa elliptischen Befestigungstopf,

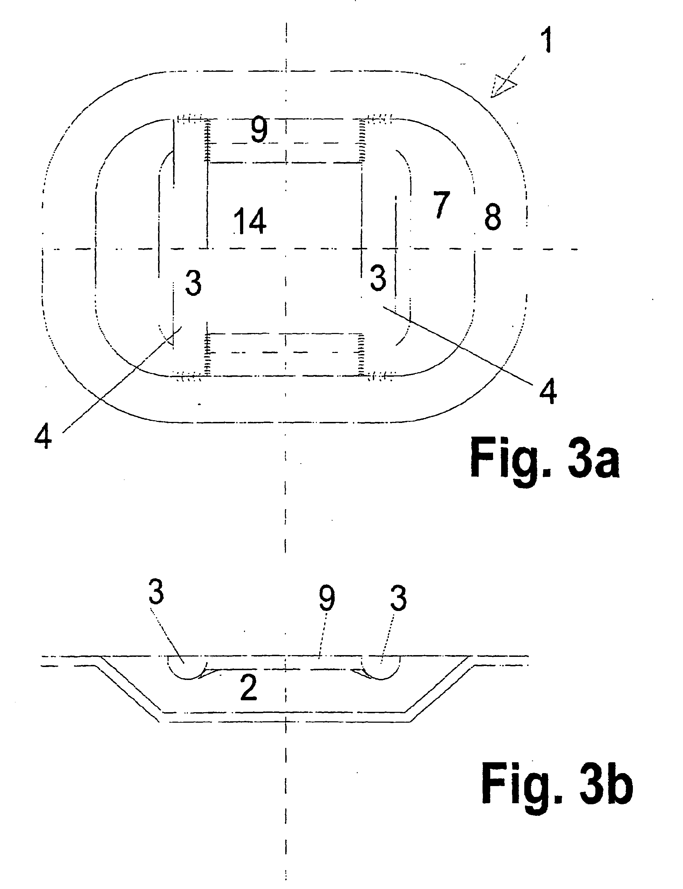

- Figuren 3: einen viereckigen Befestigungstopf in Aufsicht und Schnittdarstellung,

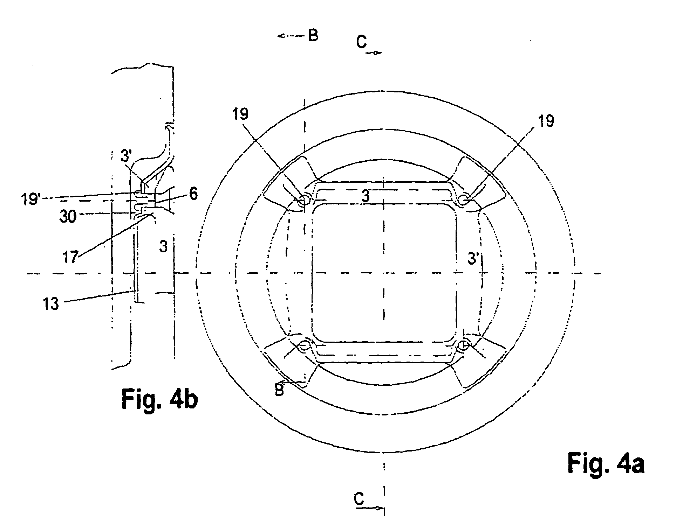

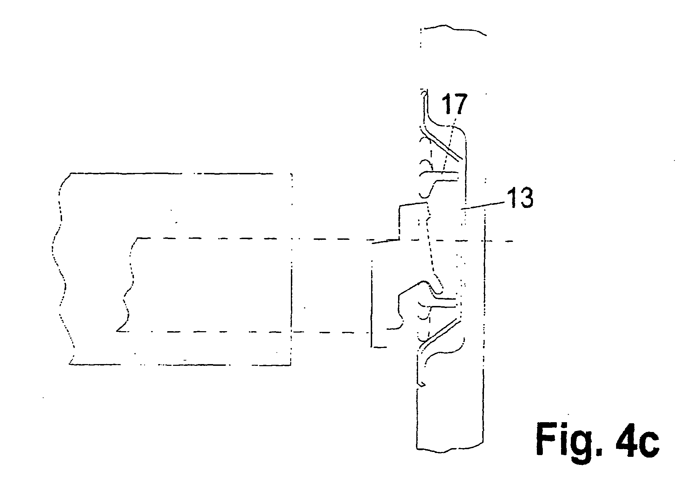

- Figuren 4: eine weitere Bauform eines Befestigungstopfes in Aufsicht und zwei Schnittdarstellungen, die unterschiedliche Detailvarianten zeigen,

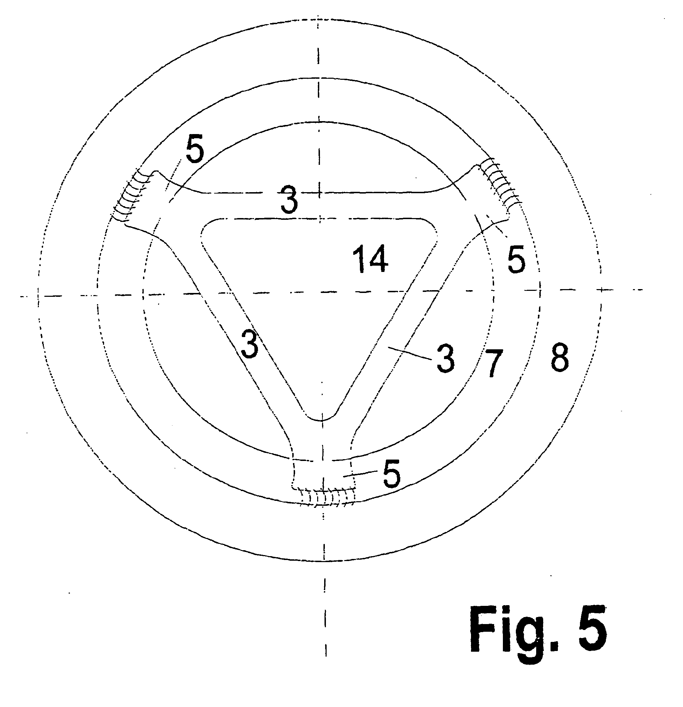

- Fig. 5: eine Aufsicht auf einen Befestigungstopf mit drei Stegen und

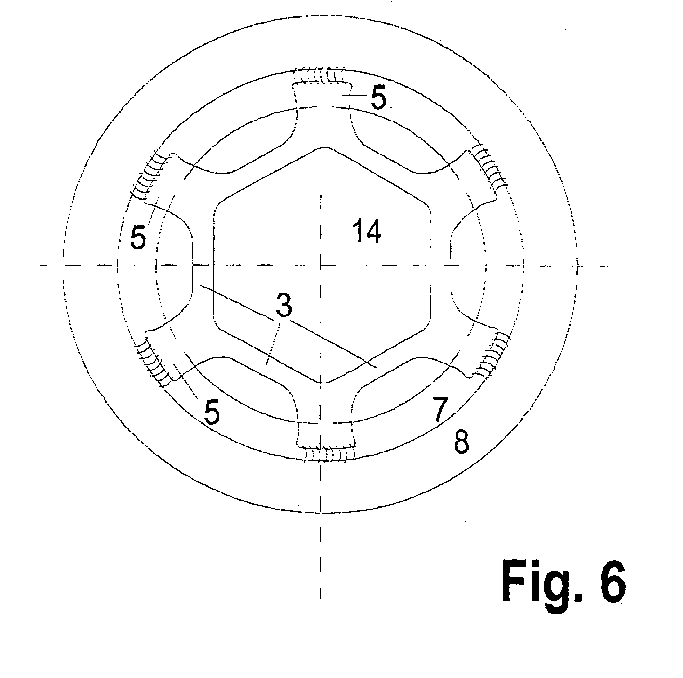

- Fig. 6: eine Aufsicht auf einen Befestigungstopf mit sechs Stegen.

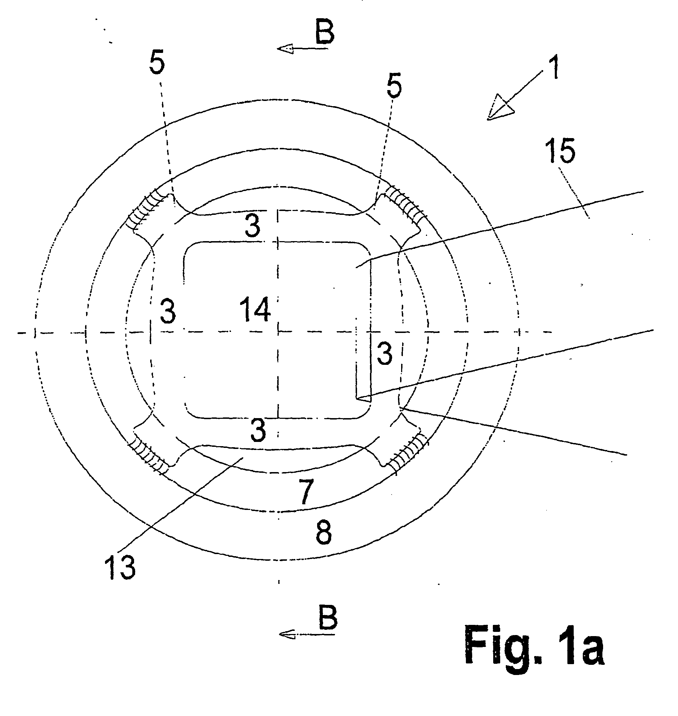

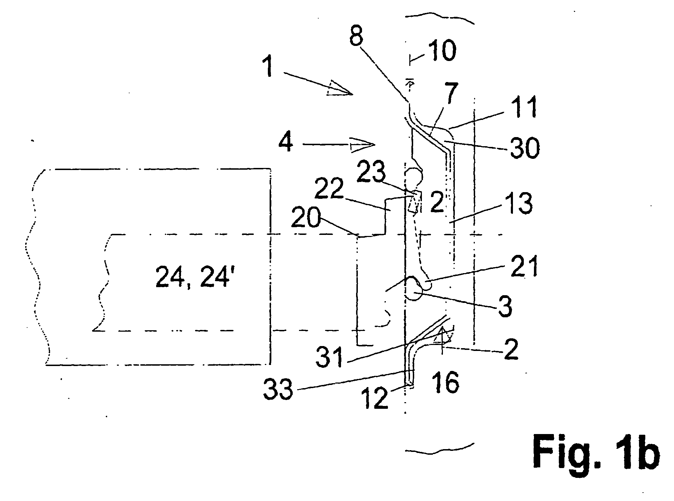

Die Figuren 1a und 1b zeigen die bevorzugte Ausführungsform des Befestigungstopfes 1.

Wie die Schnittdarstellung der Fig. 1b durch die Mitte des Befestigungstopfes 1 zeigt, besteht der Befestigungstopf 1 aus einem Basistopf 2, von dessen rundem Boden 13 schräg nach außen umlaufend Flanken 7 ansteigen, und von deren obersten Enden sich ringförmig umlaufend ein Flansch 8 in der Öffnungsebene, der Hauptebene 10, umläuft, dessen Außenkante 12 wieder geringfügig nach innen, also in Richtung auf die Bodenebene 11 hin, gekröpft ist.

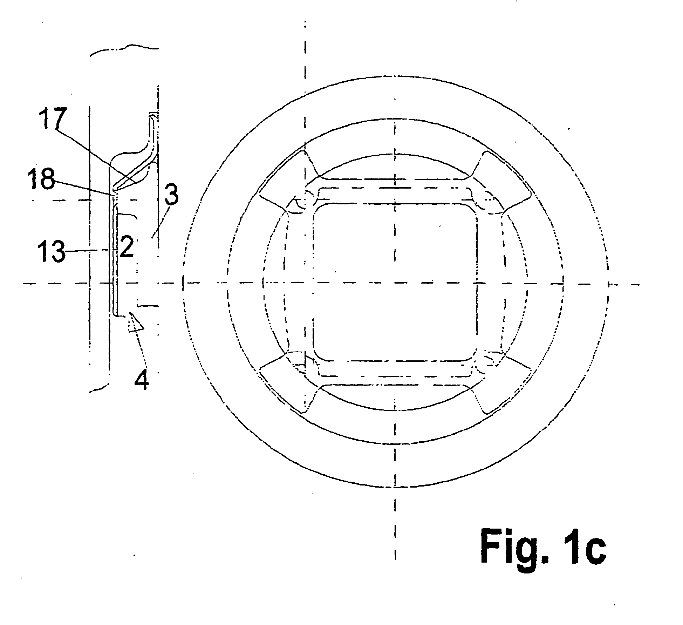

Über dieser Topfvertiefung 2, noch innerhalb des Basistopfes 4, ist ein Stern befestigt, der aus vier Stegen 3 besteht, die symmetrisch zur Mitte der Aufsicht der Fig. 1a betrachtet außermittig angeordnet sind und ein Quadrat mit einer Mittenöffnung 14 bilden, von dessen Ecken Fortsätze 5 radial nach außen weisen und in der Hauptebene 10 des Basistopfes 4 diesen Basistopf etwa am Übergang zwischen der Flanke 7 und dem Flansch 8 erreichen und dort mit ihm verschweißt sind. Außer der Mittenöffnung 14 entstehen dadurch zwischen den Flanken 7 und der jeweiligen Außenkante des Steges 3 Einfädelöffnungen, durch die hindurch ein Zurrgurt 15 aus-/eingefädelt und über die Mittenöffnung 14 wieder ein-/ausgeführt werden kann, wie in Fig. 1 dargestellt. Dabei ist eine bestimmte Winkelbreite zum Verspannen anwendbar, an einem Vertikalsteg 3 können jedoch keine vertikalen Verspannungen eines Zurrgurtes 15 ohne Selbsthemmung oder Beschädigung des Zurrgurtes durchgeführt werden.

Fig. 1c zeigt eine andere Möglichkeit, die Stege 3 mit dem Basistopf 4 zu verbinden, nämlich durch Lochschweißung:

Ebenso wie bei der Lösung gemäß Fig. 1 a bilden die Stege 3 mit den Fortsätzen 5 einen einstückigen Stern, jedoch weist der Stern gemäß Fig. 1c Füße 17 als Abstandshalter gegenüber dem Boden 13 des Basistopfes auf, die eben so hoch sind, daß die Stege 3 wiederum nicht aus der Topfvertiefung 2 des Basistopfes 4 herausragen.

Im Bereich des Aufsetzens der Füße 17 weist der Boden 13 des Basistopfes 4 Schweißöffnungen 18 auf, die ein Verschweißen von der Rückseite des Basistopfes 4 her ermöglichen.

Die Schnittdarstellung der Fig. 1b zeigt weiterhin eine spezielle Querschnittsgestaltung der Stege 3 mit einer Birnenform, deren schmales Ende zur Mittenöffnung 14 hin gerichtet ist, und wobei die eine der im Winkel der Birnenform zueinander liegenden Flanken auf oder parallel zur Hauptebene 10 des Basistopfes 4 liegt.

Diese Birnenform erleichtert das Auflegen und Hintergreifen des Balkenkopfes 20, der von der offenen Seite her in die Mittenöffnung 14 hineinragt und mit seiner nach unten weisende Nase 21 den unteren Steg 3 hintergreift.

Am oberen Ende des Balkenkopfes weist dieser einen Fortsatz 22 auf, der knapp unter dem oberen Steg 3 endet.

Ein Einsetzen des Balkenkopfes 20 erfolgt durch Eindrehen des Balkenkopfes, indem dieser mit seiner nach unten weisenden Nase 21 bereits den unteren Steg 3 hintergreift, mit seinem oberen Fortsatz 22 jedoch noch außerhalb der Topfvertiefung 2 liegt. Der am Balkenkopf 20 befestigte Sperrbalken 24 bzw. Doppelstockbalken 24' weist dabei von dem Befestigungstopf 1 schräg nach unten, und erst durch Hochklappen in die horizontale Lage liegt der obere Fortsatz 22 des Balkenkopfes 20 unterhalb des oberen Steges 3. Die zum Boden 13 des Basistopfes 4 hin gerichtete Stirnfläche des Balkenkopfes ist dabei so von oben nach unten außen geneigt, daß bereits ein Absenken des Sperrbalkens um weniger als 10°, insbesondere ca. 5°, genügt, um den Balkenkopf 20 nach oben aus dem Befestigungstopf 1 herausnehmen zu können. Bei horizontaler Lage des Sperrbalkens kann eine zusätzliche Sicherungsklinke 23, die von dem oberen Fortsatz 22 aus nach oben und hinter den oberen Steg 3 greift, jedoch diesbezüglich in den Balkenkopf 20 hinein zurückgezogen oder zurückgedrückt werden kann, die Verbindung des Balkenkopfes 20 mit dem Befestigungstopf 1 sichern, indem diese Klinke 23 mittels einer Feder in der Sicherungsposition vorgespannt ist.

Fig. 1b zeigtferner die Form der Vertiefung 30 in der Wand 16, um den Befestigungstopf 1 aufzunehmen.

Die Flanke der Ausnehmung nimmt dabei nicht die Schräge der Flanke 7 des Basistopfes 4 auf. Vielmehr ist die Vertiefung eine zylindrische Vertiefung, an die sich außen umlaufend eine ringförmige Vertiefung für den Flansch 8 anschließt. Die Wände 31 des tieferen Teiles der Vertiefung 30 sind zylindrisch, und an ihren umlaufenden Übergängen zum Boden 32 einerseits sowie zu dem Vertiefungsring 33 andererseits stark gerundet.

Dadurch wird ein ringförmiger Hohlraum 34 zwischen Basistopf 4 und der Wand 16 gebildet, der im tiefliegenden Bereich der Vertiefung, nahe des Bodens, den größten Querschnitt 35 aufweist. Dieser größte Querschnitt 35 dient als räumlicher Puffer für überschüssigen Kleber, wenn Kleber einerseits auf der Bodenfläche und andererseits auf dem Vertiefungsring 33 aufgetragen wird. Dadurch wird das Austreten von Kle-ber über den äußeren Rand des Flansches 8 hinaus zuverlässig vermieden, und dennoch eine sichere Verklebung an den größten Kontaktflächen, nämlich dem Flansch mit den äußeren Bereichen der Flanken einerseits und der Bodenfläche andererseits, erzielt.

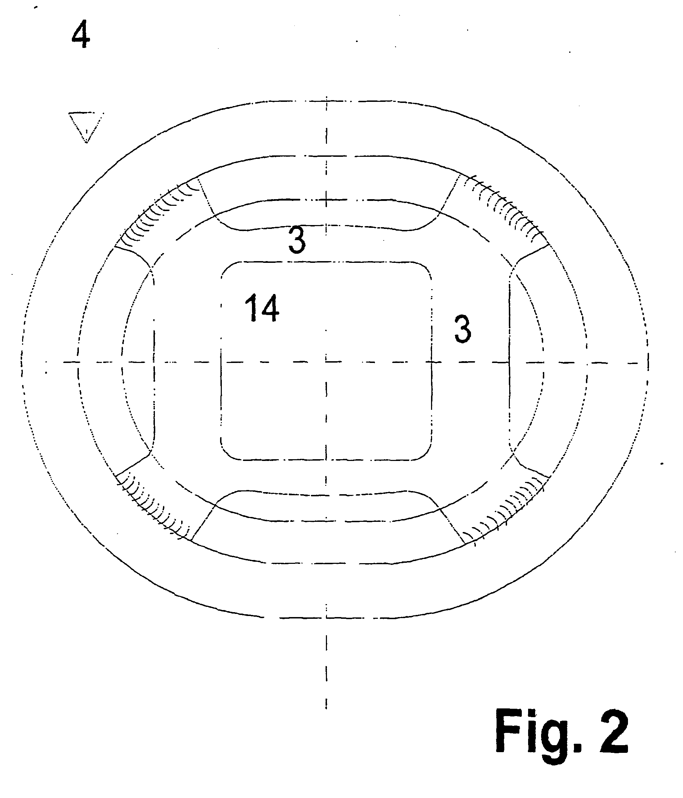

Fig. 2 zeigt einen Befestigungstopf, bei dem der Basistopf 4 kein rotationssymmetrisches Teil wie in Fig.1, sondern ein etwa elliptisches Teil mit zwei parallel zueinander liegenden Längsseiten, ist. Die Stege 3 sind dabei entweder mit geraden Außenkanten oder mit konvex nach außen gewölbten Außenkanten ausgestattet, wobei bevorzugt die parallel zu den geraden Längsseiten des Basistopfes 4 liegenden Stege 3' eine gewölbte Außenkante besitzen, da sie wegen der geringeren Quererstreckung des Basistopfes in der kurzen Querrichtung insgesamt schmaler gestaltet werden müssen, um eine quadratische Mittenöffnung 14 zu erzielen. Die stattdessen parallel zu den gerundeten Schmalseiten des Basistopfes 4 liegenden Stege 3 können von vorneherein ausreichend breit dimensioniert werden, und damit mit parallel zueinander verlaufenden, geraden Kanten ausgestattet sein.

Die Ecken des Querschnitts der Stege, die in diesem Fall aus einem gleichmäßig dicken Blechteil ausgestanzt sind, sind gerundet, um Beschädigungen an den Zurrgurten 15 zu vermeiden.

### BEZUGSZEICHENLISTE

- 1: Befestigungstopf
- 2: Topfvertiefung
- 3: Steg
- 4: Basistopf
- 5: Fortsätze
- 6: Niet
- 7: Flanke
- 8: Flansch
- 9: Stabilisierungsplatte
- 10: Hauptebene
- 11: Bodenebene
- 12: Außenkante
- 13: Boden
- 14: Mittenöffnung
- 15: Spanngurt
- 16: Aufbauwand
- 17: Füße
- 18: Schweißöffnung
- 19: Nietöffnung
- 20: Balkenkopf
- 21: Nase
- 22: Fortsatz
- 23: Sicherungsklinke
- 24: Sperrbalken
- 24': Doppelstockbalken
- 30: Vertiefung
- 31: Wand
- 32: Boden
- 33: Vertiefungsring
- 34: Hohlarm
- 35: großer Querschnitt

## Patentansprüche

1. Befestigungsvorrichtung mit wenigstens einem Befestigungstopf (1) zum wenigstens teilweisen Einlassen in den Aufbautenwänden von Lastfahrzeugen, insbesondere in Schichtholzplatten oder Sandwichplatten, wobei der Befestigungstopf (1) mehrere quer über die Topfvertiefung (2) verlaufende, mit einem Basistopf (4) fest verbundene Stege (3,3') aufweist,
**dadurch gekennzeichnet, dass**
die Stege (3,3'...) im Winkel zueinander stehen.

2. Befestigungsvorrichtung nach Anspruch 1,
**dadurch gekennzeichnet, daß**
die Stege (3) parallel zur Hauptebene (10) des Basistopfes liegen, und insbesondere die Stege von beiden Seiten - in der Hauptebene (10) betrachtet - her zugänglich sind, so daß ein Zurrgurt um den Steg herum durch die Topfvertiefung (2) hindurchgeführt werden kann, und insbesondere die Stege außermittig bezüglich des Basistopfes (4), insbesondere dessen Topfvertiefung (2), verlaufen, und insbesondere alle Stege (3) eines Befestigungstopfes (1) zusammen einstückig ausgebildet sind, und insbesondere ein regelmäßiges Poligon bilden.

3. Befestigungsvorrichtung nach Anspruch 2,
**dadurch gekennzeichnet, daß**
das Poligon an seinen Ecken nach außen weisende Fortsätze (5) aufweist, die der Befestigung am Basistopf (4), insbesondere mittels Verschweißen oder Vernieten, dienen.

4. Befestigungsvorrichtung nach Anspruch 3,
**dadurch gekennzeichnet, daß** die Stege (3), insbesondere zusammen mit den zum Basistopf (4) hin weisenden Fortsätzen (5'), jeweils Einzelteile sind und miteinander sowie mit dem Basistopf (4) verbunden sind, wobei die Verbindung der einzelnen Stege (3a, 3b, ...) einerseits sowie mit dem Basistopf (4) andererseits insbesondere mittels ein und derselben Nieten (6) erfolgt, und insbesondere der Basistopf (4) schräg nach innen unten abfallende Flanken (7) aufweist, und insbesondere der Basistopf (4) einen radial nach außen weisenden, insbesondere vollständig umlaufenden, Flansch (8) aufweist.

5. Befestigungsvorrichtung nach Anspruch 4,
**dadurch gekennzeichnet, daß** der Flansch (8) insbesondere parallel zur Hauptebene (10) des Basistopfes (4) verläuft und insbesondere an seinem freien Ende eine Kröpfung (12) mit einem stumpfen Zwischenwinkel in Richtung auf die Bodenebene (11) des Basistopfes (4) hin aufweist.

6. Befestigungsvorrichtung nach einem der vorhergehenden Ansprüche,
**dadurch gekennzeichnet, daß**
das Poligon ein Dreieck ist und der Befestigungstopf so in der Aufbautenwand eingesetzt ist, daß dieses Dreieck mit der Spitze nach unten weist, und insbesondere das Poligon ein Viereck, insbesondere ein Quadrat ist, wobei der Befestigungstopf so in der Aufbautenwand eingesetzt ist, daß dieses einer der Stege parallel zum Boden des Lastfahrzeuges verläuft, und insbesondere das Poligon ein Sechseck ist, wobei der Befestigungstopf so in der Aufbautenwand eingesetzt ist, daß einer der Stege parallel zum Boden des Lastfahrzeuges verläuft, und insbesondere das Poligon ein Sechseck ist, wobei der Befestigungstopf so in der Aufbautenwand eingesetzt ist, daß dieses Sechseck mit der Spitze nach unten weist.

7. Befestigungsvorrichtung nach einem der vorhergehenden Ansprüche,
**dadurch gekennzeichnet, daß**
die Kanten der Stege (3) gerundet sind.

8. Befestigungsvorrichtung nach einem dervorhergehenden Ansprüche,
**dadurch gekennzeichnet, daß** die in der Hauptebene (10) bezüglich des Basistopfes nach außen weisende Außenkante (12) konvex nach außen gekrümmt ist, insbesondere mit einer Krümmung parallel zur Krümmung des Überganges zwischen Flanke (7) und Flansch (8) des Basistopfes (4).

9. Befestigungsvorrichtung nach einem dervorhergehenden Ansprüche,
**dadurch gekennzeichnet, daß** der Basistopf (4) einstückig ausgebildet und insbesondere als Tiefziehteil hergestellt ist.

10. Befestigungsvorrichtung nach einem der vorhergehenden Ansprüche,
**dadurch gekennzeichnet, daß**
der Basistopf (4) ein rotationssymmetrisches Teil ist und die Flanken (7) einen Kegelstumpf bilden, und insbesondere der Basistopf (4) in zwei aufeinander senkrecht stehenden Richtungen spiegelbildlich ausgebildet, insbesondere elliptisch oder rechtekkig mit abgerundeten Ecken ist.

11. Befestigungsvorrichtung nach einem dervorhergehenden Ansprüche,
**dadurch gekennzeichnet, daß** zwei bezüglich einer Mittelebene des Basistopfes (4) einander gegenüberliegende Stege (3, 3') durch Stabilisierungsplatten (9) miteinander verbunden sind, die an ihren Stirnseiten mit den Stegen (3, 3') und and an einer ihrer Längsseiten mit dem Basistopf (4) fest verbunden, insbesondere verschweißt, sind, insbesondere über ihre gesamte Längserstreckung.

12. Befestigungsvorrichtung nach Anspruch 11,
**dadurch gekennzeichnet, daß** bei einem Verschweißen der Stege (3) mit dem Basistopf (4) das Verschweißen durch Durchgangsöffnungen in den Flanken (7) und/oder im Boden (13) des Basistopfes (4) durch Lochschweißung geschieht.

13. Befestigungsvorrichtung nach einem der vorhergehenden Ansprüche,
**dadurch gekennzeichnet, daß**
die Befestigungsvorrichtung einen Balkenkopf (20) umfaßt, der entsprechend der Gestaltung und Orientierung beim Anbringen des Befestigungstopfes (1) gestaltet ist zwecks formschlüssigem Einrasten in Schwerkraftrichtung hinter den Steg (3) und/oder die Stabilisierungsplatte (9) eines Befestigungstopfes (1), und insbesondere der Balkenkopf (20) eine hinter den Steg (3) bzw. die Stabilisierungsplatte (9) eingreifende Nase (21) aufweist sowie einen nach oben weisenden Fortsatz (22), der bei den Steg (3) hintergreifenden Nase (21) knapp unter dem gegenüberliegenden, oberen Steg (3) bzw. der Stabilisierungsplatte (9) endet, und insbesondere an dem Fortsatz (22) eine federbeaufschlagte, nach außen weisende Sicherungsklinke (23) zum Hintergreifen des oberen Steges (3) vorhanden ist.

14. Befestigungsvorrichtung nach Anspruch 13,
**dadurch gekennzeichnet, daß**
der Balkenkopf (20) am freien Ende eines quer durch den Fahrzeugaufbau verlaufenden Sperrbalkens (24) bzw. eines Doppelstockbalkens (24') befestigt ist, und insbesondere die nach außen weisende Stirnfläche des Balkenkopfes (20) vom nach oben weisenden Fortsatz (22) zur nach unten weisenden Nase (21) schräg nach außen unten so abfällt, daß sich der nach oben weisende Fortsatz (22) bereits außerhalb des Befestigungstopfes (1) befindet, wenn der den Balkenkopf (20) tragende Balken (24) bzw. (24') von der Horizontalen aus um wenige Grad, insbesondere mehr als 5°, insbesondere mehr als 10°, nach unten abgesenkt ist.

## Claims

1. Attachment device with at least an attachment pot (1) to be inserted at least partially in the mounting walls of the transport vehicles, in particular in layered wooden plates or sandwich like plates, whereupon the attachment pot (1) has several cross-bars (3, 3') non-rotatingly secured to a base pot (4), transversely extending over the pot recess (2), **characterized in that** cross-bars (3, 3') are arranged at an angle one with respect to the other.

2. Attachment device according to claim 1, **characterized in that** the cross-bars (3) are arranged in parallel to the base pot principal surface (10), and in particular the cross-bar is accessible from its both ends - as seen in the principal surface (10) - thus that through the pot recess (2) there may be inserted a compression belt around the cross-bar, and in particular the cross-bars are eccentrically extending with respect to the base pot (4), in particular with respect to its pot recess (2), and in particular all the cross-bars (3) of an attachment pot (1) are formed together from one piece, and in particular they are forming a regular polygon.

3. Attachment device according to claim 2, **characterized in that** at its corners, the polygon has outwardly extending prominences (5) employed for attaching to the base pot (4), in particular by welding or riveting.

4. Attachment device according to claim 3, **characterized in that** the cross-bars (3), in particular together with the prominences (5) orientated towards the base pot (4), are singular components and they are joined each other as well as to the base pot (4), whereupon on the one hand, the joining of the singular cross-bars (3a, 3b,...) as well as their joining to the base pot (4) on the other hand, is in particular effected by means of one and the same rivet (6), and in particular the base pot (4) has downwardly interiorly obliquely orientated flanks (7), and in particular the base pot (4) has a radially exteriorly orientated flange (8), in particular over its entire circumference.

5. Attachment device according to claim 4, **characterized in that** the flange (8) is in particular extending in parallel to the principal surface (10) of the base pot (4), and in particular at its free end is has a bent (12) with an exterior blunt angle orientated towards the base surface (11) of the base pot (4).

6. Attachment device according to any one of the preceding claims, **characterized in that** the polygon is a triangle and the attachment pot is inserted into the mounting wall thus that this triangle be orientated with its vertex downwardly, and in particular the polygon is a tetragon, in particular a square, whereupon the attachment pot is inserted into the mounting wall thus that one of its cross-bars extend in parallel to the base of the transport vehicle, and in particular the polygon is a hexangle, whereupon the attachment pot is inserted into the mounting wall thus that one of its cross-bars extend in parallel to the base of the transport vehicle, and in particular the polygon is a hexangle, whereupon the attachment pot is inserted into the mounting wall thus that this hexangle be orientated with its vertex downwardly.

7. Attachment device according to any one of the preceding claims, **characterized in that** the edges of the cross-bars (3) are rounded off.

8. Attachment device according to any one of the preceding claims, **characterized in that** in the principal surface (10), with respect to the base pot, the exteriorly orientated exterior edge (12) is exteriorly curvedly bent, in particular having a curvature parallel to the passing curvature between the flank (7) and the flange (8) of the base pot (4).

9. Attachment device according to any one of the preceding claims, **characterized in that** the base pot (4) is formed from one piece, and in particular is made by means of a deep drawing.

10. Attachment device according to any one of the preceding claims, **characterized in that** the base pot (4) is a symmetrical revolution piece and the flanks (7) are forming a frustum of cone, and in particular the base pot (4) is symmetrically formed in two directions vertically with respect to each other, in particular elliptically or rectangularly with rounded off corners.

11. Attachment device according to any one of the preceding claims, **characterized in that** two mutually opposed cross-bars (3, 3') with respect to a medial surface of the base pot (4) are joined together by means of non-rotatingly joined stabilizing plates (9), in particular welded, in particular over their entire longitudinal length, on the front sides to the cross-bars (3, 3'), and on one of the longitudinal sides, to the base pot (4).

12. Attachment device according to claim 11, **characterized in that** on welding the cross-bars (3) to the base pot (4), the welding is effected by bore welding, through passing orifices from the flanks (7) and/or from the base (13) of the base pot (4).

13. Attachment device according to any one of the preceding claims, **characterized in that** the attachment device consists of a properly shaped and orientated beam cap (20) to be attached into the attachment pot (1), to the end of a form locking in the direction of the weight force behind the cross-bar (3) and/or of the stabilizing plate (9) of an attachment pot (1), and in particular the beam cap (20) has a catch (21) which seizes from behind the cross-bar (3) and the stabilizing plate (9) respectively, as well as an upwardly orientated prominence (22), which, at the moment when the catch (21) seizes from behind the cross-bar (3), ends up just under the cross-bar (3) and the superior opposed stabilizing plate (9) respectively, and in particular on the prominence (22) there is an elastically stressed exteriorly orientated safety pawl (23) to seize from behind the superior cross-bar (3).

14. Attachment device according to claim 13, **characterized in that** the beam cap (20) is attached to the free end of a locking beam (24) and of a multi-level storage beam (24') extending transversely through the cargo body respectively, and in particular the exteriorly orientated front surface of the beam cap (20) is obliquely, exteriorly, downwardly extending from the upwardly orientated prominence (22) towards the downwardly orientated catch (21), thus that the upwardly orientated prominence (22) is already at the exterior of the attachment pot (1) whether the beam (24) and (24') respectively, carrying the beam cap (20) is let several degrees downwardly with respect to the horizontal axis, in particular with more than 5°, in particular with more than 10°.

## Revendications

1. Dispositif de fixation comportant au moins un pot de fixation (1) pour l'insertion au moins partielle dans les parois de montage des véhicules de transportation, notamment dans des plaques en bois stratifié ou des plaques sandwich, où le pot de fixation (1) présente plusieurs traverses (3, 3') se trouvant dans un assemblage rigide a un pot de base (4), s'étendant transversalement par-dessus le creux (2) dudit pot, **caractérisé en ce que** traverses (3, 3') faisant plus particulièrement un angle l'une par rapport à l'autre.

2. Dispositif de fixation selon la revendication 1, **caractérisé en ce que** les traverses (3) sont disposées parallèlement au plan principal (10) du pot de base, l'accès à la traverse - vue dans le plan principal (10) - étant notamment possible depuis ses deux extrémités, de sorte que par le creux (2) du pot une courroie de serrage peut être insérée autour de ladite traverse, les traverses s'étendant plus particulièrement excentriquement par rapport au pot de base (4) et notamment par rapport au creux (2) dudit pot, toutes les traverses (3) d'un pot de fixation (1) étant plus particulièrement formées d'une seule et même pièce et formant un polygone régulé.

3. Dispositif de fixation selon la revendication 2, **caractérisé en ce que** le polygone présente aux coins des proéminences (5) orientées vers l'extérieur et servant à la fixation sur le pot de base (4), notamment par soudage ou rivetage.

4. Dispositif de fixation selon la revendication 3, **caractérisé en ce que** les traverses (3) notamment avec les proéminences (5') orientées vers le pot de base (4) sont des composants individuels, étant liées d'une part entre elles et d'autre part avec le pot de base (4), où la liaison des traverses individuelles (3a, 3b, ...) d'une part entre elles-mêmes et d'autre part avec le pot de base (4) se fait particulièrement au moyen d'un seul et même rivet (6), le pot de base (4) présentant plus particulièrement des flancs (7) orientés obliquement en bas vers l'intérieur, le pot de base (4) comportant plus particulièrement un rebord (8) orienté en direction radiale vers l'extérieur, plus particulièrement sur l'ensemble de sa circonférence.

5. Dispositif de fixation selon la revendication 4, **caractérisé en ce que** le rebord (8) s'étend particulièrement parallèlement par rapport au plan principal (10) du pot de base (4), comportant plus particulièrement à son extrémité un pli (12) présentant un angle intérieur obtus orienté vers le plan de la base (11) du pot de base (4).

6. Dispositif de fixation selon l'une des revendications précédentes, **caractérisé en ce que** le polygone est un triangle et le pot de fixation est inséré dans la paroi de montage de façon à ce que le sommet dudit triangle soit orienté vers le bas, le polygone étant particulièrement un quadrilatère, notamment un carré, où le pot de fixation est inséré dans la paroi de montage de façon à ce que l'une des traverses dudit pot s'étende parallèlement à la base du véhicule de transportation, le polygone étant plus particulièrement un hexagone, où le pot de fixation est inséré dans la paroi de montage de façon à ce que l'une des traverses dudit pot s'étende parallèlement à la base du véhicule de transportation, le polygone étant plus particulièrement un hexagone, ou le pot de fixation est inséré dans la paroi de montage de façon à ce que le sommet dudit hexagone soit orienté en bas.

7. Dispositif de fixation selon l'une des revendications précédentes, **caractérisé en ce que** les bords des traverses (3) sont arrondis.

8. Dispositif de fixation selon l'une des revendications précédentes, **caractérisé en ce que** le bord externe (12) orienté vers l'extérieur, dans le plan principal (10) par rapport au pot de base est plié de façon cintrée vers l'extérieur présentant notamment une courbure parallèle par rapport à la courbure de passage entre le flanc (7) et le rebord (8) du pot de base (4).

9. Dispositif de fixation selon l'une des revendications précédentes, **caractérisé en ce que** le pot de base (4) est formé d'une seule pièce, étant notamment fabriqué au moyen d'un emboutissage profond.

10. Dispositif de fixation selon l'une des revendications précédentes, **caractérisé en ce que** le pot de base (4) est une pièce symétrique de rotation, les flancs (7) formant un tronc de cône, le pot de base (4) étant notamment formé de façon symétrique sur deux directions perpendiculaires l'une par rapport à l'autre et plus particulièrement de façon elliptique ou rectangulaire, avec des coins arrondis.

11. Dispositif de fixation selon l'une des revendications précédentes, **caractérisé en ce que** deux des traverses (3, 3') opposées l'une à l'autre par rapport à un plan médian du pot de base (4) sont liées au moyen de plaques de stabilisation (9) se trouvant dans un assemblage rigide, notamment soudées, particulièrement sur toute leur extension longitudinale, sur les côtés frontaux aux traverses (3, 3') et, sur l'un des côtés longitudinaux, au pot de base (4).

12. Dispositif de fixation selon la revendication 11, **caractérisé en ce que** lors du soudage des traverses (3) au pot de base (4), l'opération de soudage est réalisée par soudage par trous, par des orifices de passage dans les flancs (7) et/ou dans la base (13) du pot de base (4).

13. Dispositif de fixation selon l'une des revendications précédentes, **caractérisé en ce que** le dispositif de fixation comporte une tête de poutre (20) conforme du point de vue de la forme et de l'orientation et destinée à la fixation dans le pot de fixation (1), dans le but de réaliser un blocage au moyen d'adhérence des formes dans la direction de la force de pesanteur derrière la traverse (3) et/ou la plaque de stabilisation (9) d'un pot de fixation (1), et plus particulièrement la tête de poutre (20) présente un nez (21) qui se grippe par l'arrière sur la traverse (3) respectivement sur la plaque de stabilisation (9), ainsi qu'une proéminence (22) orientée vers le haut, qui, lorsque le nez (21) se grippe par l'arrière sur la traverse (3), se termine immédiatement sous la traverse (3) respectivement sous la plaque de stabilisation (9) supérieure opposée, la proéminence (22) étant plus particulièrement prévue avec un cliquet de sécurité (23) orienté vers l'extérieur, sous contrainte élastique, destiné au grippage par l'arrière de la traverse supérieure (3).

14. Dispositif de fixation selon la revendication 13, **caractérisé en ce que** la tête de poutre (20) est fixée sur l'extrémité libre d'une poutre de blocage (24) et respectivement d'une poutre de sur-étagement (24') s'étendant transversalement à travers la carrosserie du véhicule et, plus particulièrement, la surface frontale de la tête de poutre (20), orientée vers l'extérieur, s'étend obliquement vers l'extérieur en bas, depuis la proéminence (22) orientée vers le haut, vers le nez (21) orienté vers le bas, de sorte que ladite proéminence (22) orientée vers le haut se trouve déjà à l'extérieur du pot de fixation (1) si la poutre (24) respectivement (24') portant la tête de poutre (20) est abaissée de quelques degrés par rapport à l'axe horizontal, notamment de plus de 5°, notamment de plus de 10°.
